# EUROPÄISCHE PATENTANMELDUNG

(11) **EP 1 780 434 A2**
(43) Veröffentlichungstag der Anmeldung: **02.05.2007**
(21) Anmeldenummer: 06012801.4
(22) Anmeldetag: 22.06.2006
(51) Int. Cl.: F16D 13/58

(54) **Kupplungseinrichtung**

(30) Priorität: 29.10.2005 DE 102005051872
(71) Anmelder: LuK Lamellen und Kupplungsbau Beteiligungs KG, 77813 Bühl (DE)
(72) Erfinder: Lehmann, Steffen, 76275 Ettlingen (DE); Sieber, Dimitri, 76275 Ettlingen (DE); Kooy, Ad, Dr., 77886 Lauf (DE)

(57) **Zusammenfassung**

Die Erfindung betrifft eine Kupplungseinrichtung mit einer Kupplungsscheibe (18;78), die eine Kupplungsnabe (20;80) umfasst.

Um die Kupplungseinrichtung, insbesondere im Hinblick auf die im eingebauten Zustand der Kupplungseinrichtung im Betrieb auftretende Geräuschentwicklung zu optimieren, ist eine Pendelmassenträgereinrichtung (23;79) einer Fliehkraftpendeleinrichtung (28), die mehrere Pendelmassen (25,26) umfasst, die an der Pendelmassenträgereinrichtung relativ zu dieser bewegbar angebracht sind, mit der Kupplungsscheibe gekoppelt.

## Beschreibung

Die Erfindung betrifft eine Kupplungseinrichtung mit einer Kupplungsscheibe, die eine Kupplungsnabe umfasst.

Aufgabe der Erfindung ist es, eine Kupplungseinrichtung gemäß dem Oberbegriff des Anspruchs 1, insbesondere im Hinblick auf die im eingebauten Zustand der Kupplungseinrichtung im Betrieb auftretende Geräuschentwicklung, zu optimieren.

Die Aufgabe ist bei einer Kupplungseinrichtung mit einer Kupplungsscheibe, die eine Kupplungsnabe umfasst, dadurch gelöst, dass eine Pendelmassenträgereinrichtung einer Fliehkraftpendeleinrichtung, die mehrere Pendelmassen umfasst, die an der Pendelmassenträgereinrichtung relativ zu dieser bewegbar angebracht sind, mit der Kupplungsscheibe gekoppelt ist. Gemäß einem wesentlichen Aspekt der Erfindung wird eine Fliehkraftpendeleinrichtung in die Kupplungsscheibe integriert. Dadurch kann die Wirkung eines in einem Antriebsstrang eines Kraftfahrzeugs vorhandenen Torsionsschwingungsdämpfers verbessert werden.

Ein bevorzugtes Ausführungsbeispiel der Kupplungseinrichtung ist dadurch gekennzeichnet, dass die Pendelmassenträgereinrichtung drehfest mit der Kupplungsnabe verbunden ist. Die Pendelmassenträgereinrichtung kann zum Beispiel mit der Kupplungsnabe verstemmt, verschraubt oder verschweißt sein. Die Pendelmassenträgereinrichtung kann auch formschlüssig mit der Kupplungsnabe verbunden sein.

Ein weiteres bevorzugtes Ausführungsbeispiel der Kupplungseinrichtung ist dadurch gekennzeichnet, dass die Fliehkraftpendeleinrichtung, insbesondere die Pendelmassenträgereinrichtung, radial innerhalb, zumindest eines axialen Abschnitts, einer Gegendruckplatte der Kupplungseinrichtung angeordnet ist. Diese Anordnung hat sich schwingungstechnisch und im Hinblick auf den zur Verfügung stehenden Bauraum als besonders vorteilhaft erwiesen.

Ein weiteres bevorzugtes Ausführungsbeispiel der Kupplungseinrichtung ist dadurch gekennzeichnet, dass die Fliehkraftpendeleinrichtung in axialer Richtung zwischen einem axialen Abschnitt der Gegendruckplatte und der Kupplungsscheibe angeordnet ist. Vorzugsweise ist an der Gegendruckplatte eine umlaufende Stufe ausgebildet, die einen Aufnahmeraum für die Fliehkraftpendeleinrichtung darstellt.

Ein weiteres bevorzugtes Ausführungsbeispiel der Kupplungseinrichtung ist dadurch gekennzeichnet, dass die Kupplungsscheibe über mindestens eine Drehschwingungsdämpfungseinrichtung mit der Kupplungsnabe gekoppelt ist. Durch die Fliehkraftpendeleinrichtung wird die Wirkung der Drehschwingungsdämpfungseinrichtung verbessert.

Ein weiteres bevorzugtes Ausführungsbeispiel der Kupplungseinrichtung ist dadurch gekennzeichnet, dass die Kupplungsscheibe durch die Pendelmassenträgereinrichtung drehfest mit der Kupplungsnabe verbunden ist. Die Pendelmassenträgereinrichtung wird vorzugsweise von einem Flanschelement gebildet, welches das Antriebsmoment von der Kupplungsscheibe auf die Kupplungsnabe überträgt.

Ein weiteres bevorzugtes Ausführungsbeispiel der Kupplungseinrichtung ist dadurch gekennzeichnet, dass sich die Pendelmassenträgereinrichtung in radialer Richtung zwischen der Kupplungsnabe und der Kupplungsscheibe erstreckt. Das liefert den Vorteil, dass kein zusätzlicher Bauraum für die Pendelmassenträgereinrichtung benötigt wird.

Ein weiteres bevorzugtes Ausführungsbeispiel der Kupplungseinrichtung ist dadurch gekennzeichnet, dass die Pendelmassen paarweise durch Abstandsbolzen miteinander verbunden sind. Bei den Abstandsbolzen handelt es sich vorzugsweise um Stufenbolzen, die sich durch die Pendelmassenträgereinrichtung hindurch erstrecken.

Ein weiteres bevorzugtes Ausführungsbeispiel der Kupplungseinrichtung ist dadurch gekennzeichnet, dass die Pendelmassen mit Hilfe von Laufrollen an der Pendelmassenträgereinrichtung relativ zu dieser bewegbar angebracht sind. Die Laufrollen dienen dazu, die Fliehkräfte der Pendelmassen im Betrieb der Kupplungseinrichtung abzustützen.

Ein weiteres bevorzugtes Ausführungsbeispiel der Kupplungseinrichtung ist dadurch gekennzeichnet, dass die Bewegung der Pendelmassen relativ zu der Pendelmassenträgereinrichtung durch mindestens ein Anschlagelement begrenzt wird, das in Umfangsrichtung elastisch ausgebildet ist. Dadurch werden unerwünschte Geräusche im Betrieb der Drehmomentübertragseinrichtung gedämpft.

Ein weiteres bevorzugtes Ausführungsbeispiel der Kupplungseinrichtung ist dadurch gekennzeichnet, dass das Anschlagelement von einem Stufenbolzen gebildet wird, dessen Enden jeweils in einer Pendelmasse aufgenommen sind und der zwischen seinen Enden einen Mittenabschnitt aufweist, der mit einem elastischen Material ummantelt ist. Der Mittenabschnitt des Stufenbolzens ist vorzugsweise mit Spiel in der Pendelmassenträgereinrichtung aufgenommen und kommt nur in den Extremstellungen der zugehörigen Pendelmassen an der Pendelmassenträgereinrichtung in Anschlag, um die Bewegung der Pendelmassen zu begrenzen. Vorzugsweise dient der Stufenbolzen zugleich als Abstandsbolzen. Dadurch werden die Abstandshalte- und die Anschlagfunktion in ein und denselben Bolzen integriert.

Ein weiteres bevorzugtes Ausführungsbeispiel der Kupplungseinrichtung ist dadurch gekennzeichnet, dass die elastische Ummantelung wiederum mit einer Metallhülse ummantelt ist. Durch die Metallhülse kann der Verschleiß reduziert und das Auftreten von einer unerwünscht hohen lokalen Pressung vermieden werden.

Die Erfindung betrifft auch eine Drehmomentübertragungseinrichtung im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und einem Getriebe mit mindestens einer Getriebeeingangswelle, mit einer vorab beschriebenen Kupplungseinrichtung.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
Figur 1 eine Drehmomentübertragungseinrichtung mit einer Kupplungseinrichtung gemäß einem Ausführungsbeispiel der Erfindung im Halbschnitt;
Figur 2eine detaillierte Ansicht der Kupplungseinrichtung aus Figur 1 im Halbschnitt;
Figur 3 eine Seitenansicht der Kupplungseinrichtung aus Figur 2 von links;
Figur 4eine perspektivische Darstellung der Kupplungseinrichtung aus Figur 2 mit einer Fliehkraftpendeleinrichtung im nicht montierten Zustand;
Figur 5 eine Explosionsdarstellung der Fliehkraftpendeleinrichtung aus Figur 4 mit mehreren Abstandsbolzen;
Figur 6 einen Abstandsbolzen aus Figur 5 im Längsschnitt;
Figur 7 die Ansicht eines Querschnitts durch den Abstandsbolzen aus Figur 6;
Figur 8 einen Abstandsbolzen gemäß einem weiteren Ausführungsbeispiel im Längsschnitt;
Figur 9die Ansicht eines Querschnitts durch den Abstandsbolzen aus Figur 8;
Figur 10 die Fliehkraftpendeleinrichtung aus Figur 5 im zusammengebauten Zustand in der Draufsicht und
Figur 11 eine Drehmomentübertragungseinrichtung mit einer Kupplungseinrichtung gemäß einem weiteren Ausführungsbeispiel im Halbschnitt.

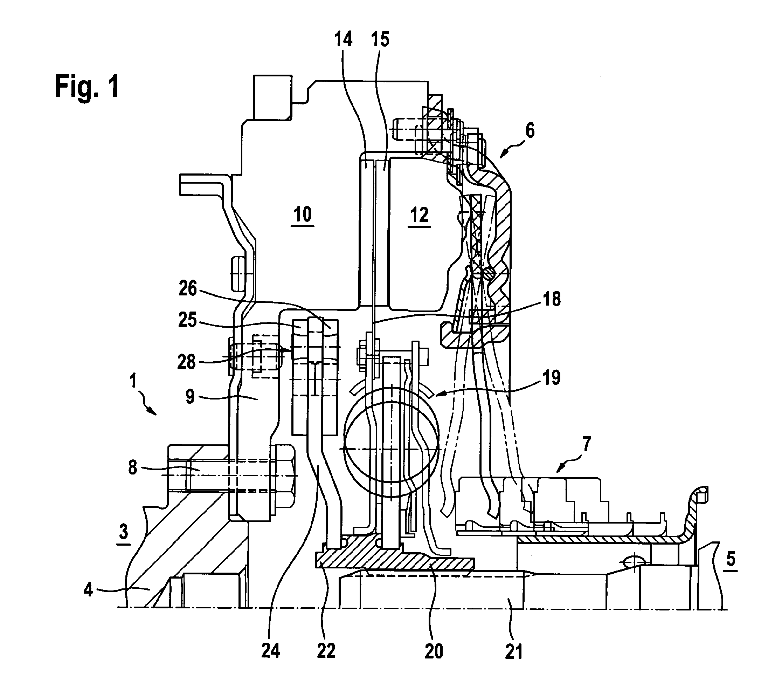

In Figur 1 ist ein Teil eines Antriebsstrangs 1 eines Kraftfahrzeugs im Halbschnitt dargestellt. Zwischen einer Antriebseinheit 3, insbesondere einer Brennkraftmaschine, von der eine Kurbelwelle 4 ausgeht, und einem Getriebe 5 ist eine Kupplung 6 angeordnet. Die Kupplung 6 ist durch eine Ausrückeinrichtung 7 betätigbar.

Die Kurbelwelle 4 der Brennkraftmaschine 3 ist über Schraubverbindungen 8 fest mit einem Flansch 9 verbunden. Der Flansch 9 ist einstückig mit einem Schwungrad 10 verbunden. Das Schwungrad 10 bildet eine Gegendruckplatte der Kupplungseinrichtung 6. Zwischen der Gegendruckplatte 10 und einer Druckplatte 12 der Kupplungseinrichtung 6 sind in bekannter Art und Weise Reibbeläge 14, 15 einer Kupplungsscheibe 18 einklemmbar. Die Kupplungsscheibe 18 ist unter Zwischenschaltung eines Drehschwingungsdämpfers 19 mit einer Kupplungsnabe 20 gekoppelt. Die Kupplungsnabe 20 wiederum ist drehfest mit einer Getriebeeingangswelle 21 des Getriebes 5 verbunden.

An dem der Brennkraftmaschine 3 zugewandten Ende 22 der Kupplungsnabe 20 ist eine Pendelmassenträgereinrichtung 23 angebracht. Die Pendelmassenträgereinrichtung 23 wird von einem Flanschelement 24 gebildet, das radial innen über eine Verzahnung formschlüssig mit der Kupplungsnabe 20 verbunden ist. Radial außen sind an dem Flanschelement 24 Pendelmassen 25, 26 begrenzt bewegbar angebracht. Die Pendelmassenträgereinrichtung 23 mit den Pendelmassen 25, 26 bildet eine Fliehkraftpendeleinrichtung 28, die in axialer Richtung zwischen dem Flansch 9 des Schwungsrads 10 und der Drehschwingungsdämpfer 19 beziehungsweise der Kupplungsscheibe 18 angeordnet ist. In radialer Richtung ist die Fliehkraftpendeleinrichtung 28 innerhalb der Gegendruckplatte 10 der Kupplungseinrichtung 6 angeordnet.

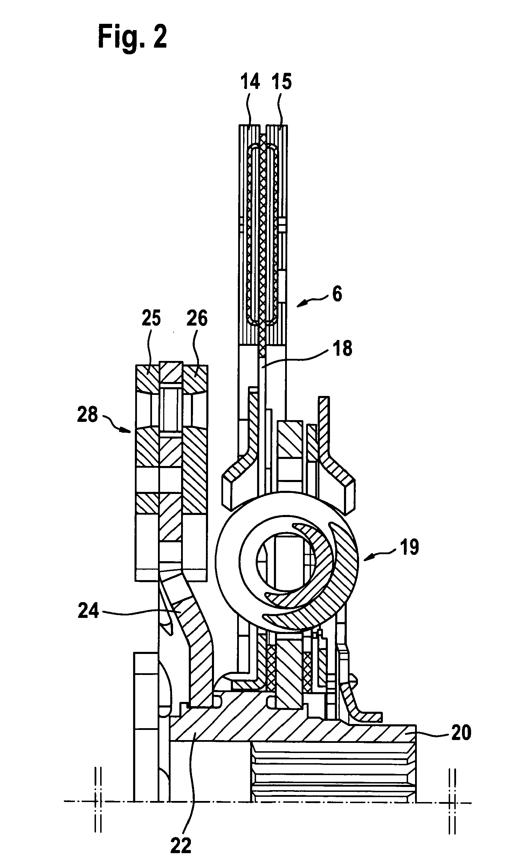

In Figur 2 ist die Kupplungsscheibe 18 mit der Fliehkraftpendeleinrichtung 28 separat, detailliert dargestellt.

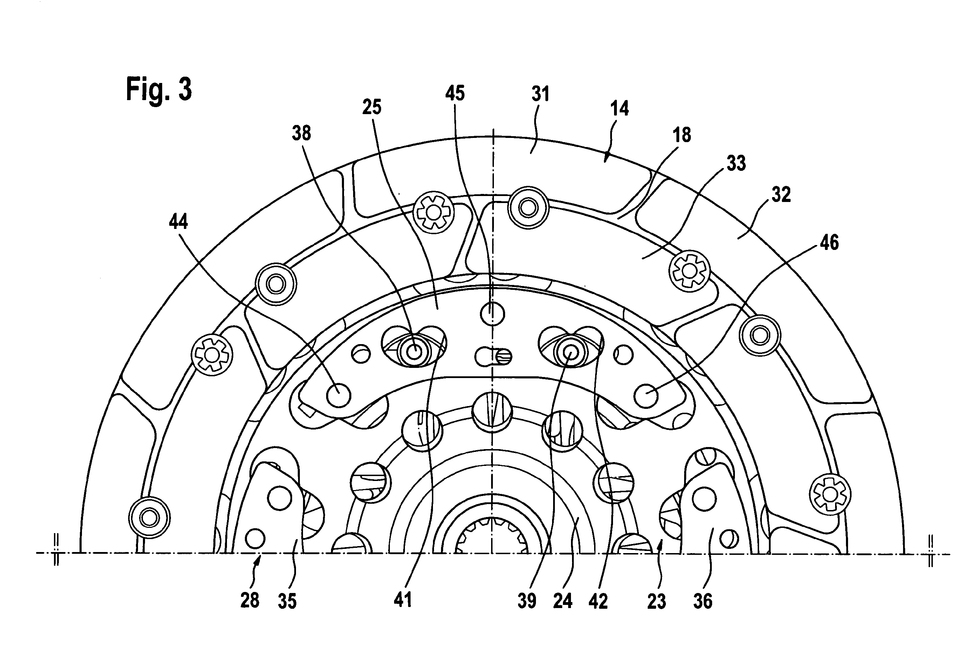

In Figur 3 ist die Kupplungsscheibe 18 mit der Fliehkraftpendeleinrichtung 28 aus Figur 2 in einer Seitenansicht von links dargestellt. In der Seitenansicht sieht man, dass der Reibbelag 14 eine Vielzahl von Reibbelagsegmenten 31 bis 33 umfasst, die in axialer Richtung federnd vorgespannt an der Kupplungsscheibe 18 angebracht sind. Die Pendelmasse 25 und zwei weitere Pendelmassen 35, 36 sind mit Hilfe einer so genannten bifilaren Aufhängung an der Pendelmassenträgereinrichtung 23 aufgehängt. Die bifilare Aufhängung wird im Folgenden am Beispiel der Pendelmasse 25 erläutert. Die beiden anderen Pendelmassen 35 und 36 sind gleicher Art und Weise an der Pendelmassenträgereinrichtung 23 aufgehängt. Der Flansch 24 der Pendelmassenträgereinrichtung 23 hat im Wesentlichen die Gestalt einer Kreisringscheibe.

Die Bewegung der Pendelmasse 25 wird durch Laufrollen 38, 39 ermöglicht, die in Laufbahnen 41, 42 geführt sind, die wiederum in der zugehörigen Pendelmasse 25 ausgespart sind. Die Laufbahnen 41, 42 werden von Durchgangslöchern gebildet, die sich in axialer Richtung durch die Pendel masse 25 hindurch erstrecken und die Gestalt von Langlöchern aufweisen, die nierenförmig gekrümmt sind. Zur Anbringung der Pendelmasse 25 an der Pendelmassenträgereinrichtung 23 sind des Weiteren drei Stufenbolzen 44, 45, 46, die auch als Abstandsbolzen bezeichnet werden, vorgesehen. In dem Flansch 24 der Pendelmassenträgereinrichtung 23 sind nierenförmig gekrümmte Langlöcher zur Aufnahme der Stufenbolzen 44 bis 46 ausgebildet. Die Laufrollen 38, 39 und die Stufenbolzen 44 bis 46 dienen dazu, die Bewegung der Pendelmasse 25 in der Zeichenebene, also in radialer Richtung und in Umfangsrichtung zu begrenzen und zu definieren.

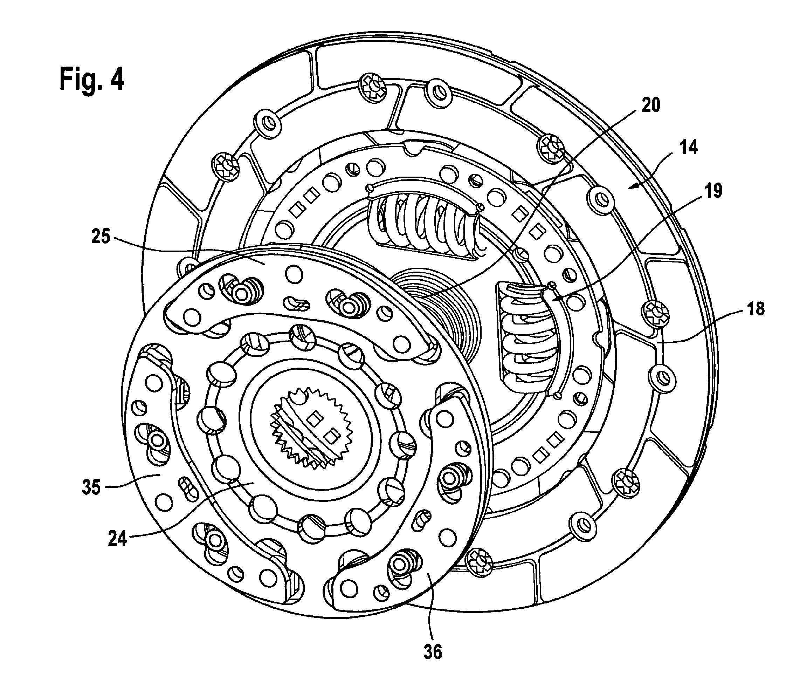

In Figur 4 sieht man, dass die drei Pendelmassen 25, 35 und 36 radial außen gleichmäßig über den Umfang des Flansches 24 verteilt angeordnet sind.

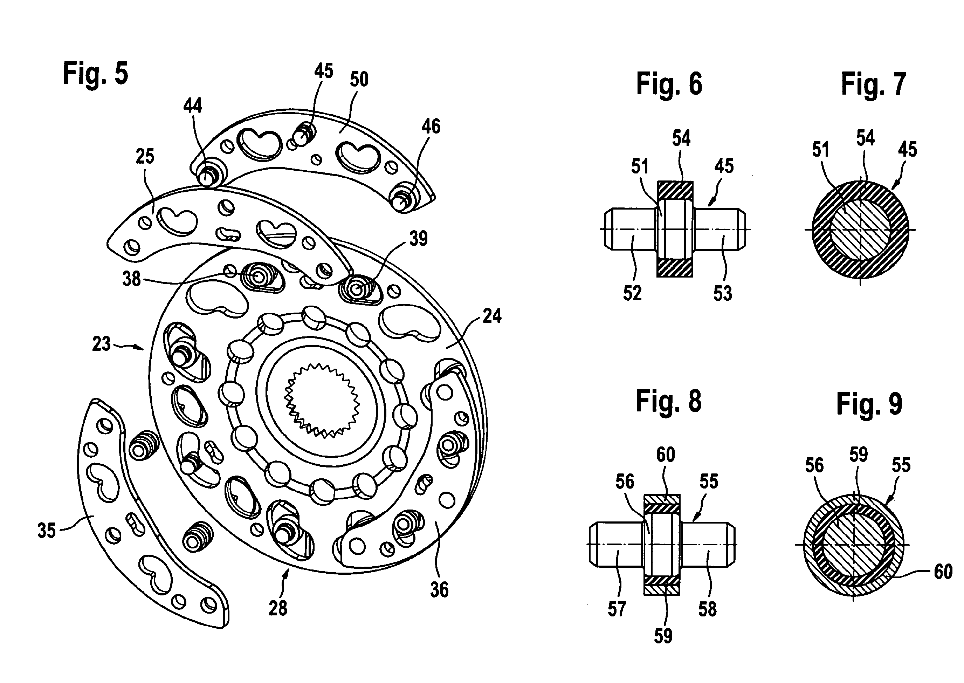

In Figur 5 ist angedeutet, dass jeweils drei Pendel massen 25 und 50 mit Hilfe der Stufenbolzen 44 bis 46 paarweise aneinander befestigt sind. Die Pendelmassen 25 und 50 sind mit den Stufenbolzen 44 bis 46 vernietet. Zur Vermeidung von eventuellen Anschlaggeräuschen, insbesondere beim Starten und Stoppen, sind die beiden Abstandsbolzen 44 und 46 teilweise mit einem elastischen Material ummantelt.

In den Figuren 6 und 7 ist der Stufenbolzen 45 im Längsschnitt und im Querschnitt dargestellt. Im Längsschnitt sieht man, dass der Stufenbolzen 45 einen im Wesentlichen kreiszylinderförmigen Abschnitt 51 aufweist, von dem sich ebenfalls zwei kreiszylinderförmige Abschnitte 52, 53 in entgegengesetzten Richtungen nach außen erstrecken. Die kreiszylinderförmigen Abschnitte 52, 53 haben einen kleineren Außendurchmesser als der Mittenabschnitt 51. An ihren freien Enden sind die kreiszylinderförmigen Abschnitte 52, 53 mit einer Fase versehen. Im eingebauten Zustand des Stufen bolzens 45 sind die kreiszylinderförmigen Abschnitte 52, 53 jeweils in einem Durchgangsloch der zugehörigen Pendelmasse aufgenommen. Der Mittenabschnitt 51 des Stufenbolzens 45 ist im eingebauten Zustand in dem zugehörigen Langloch der Pendelmassenträgereinrichtung 23 angeordnet. Der Mittenabschnitt 51 ist mit einer Ummantelung 54 aus einem elastischen, dämpfenden Kunststoffmaterial, zum Beispiel Gummi, ausgestattet. Die Ummantelung 54 dient dazu, unerwünschte Geräusche im Betrieb der Drehmomentübertragungseinrichtung zu dämpfen.

In den Figuren 8 und 9 ist ein Stufenbolzen 55 gemäß einem weiteren Ausführungsbeispiel im Längsschnitt und im Querschnitt dargestellt. Der Stufenbolzen 55 weist einen Mittenabschnitt 56 auf, von dem sich zwei kreiszylinderförmige Abschnitte 57, 58 nach außen erstrecken. Der Mittenabschnitt 56 ist mit einer Ummantelung 59 aus einem elastischen, elastomeren Kunststoff versehen. Im Unterschied zu dem in den Figuren 6 und 7 dargestellten Ausführungsbeispiel ist die Ummantelung 59, die von einer Elastomerhülse gebildet sein kann, zusätzlich durch eine Metallhülse 60 gegen übermäßigen Verschleiß und hohe lokale Pressungen geschützt.

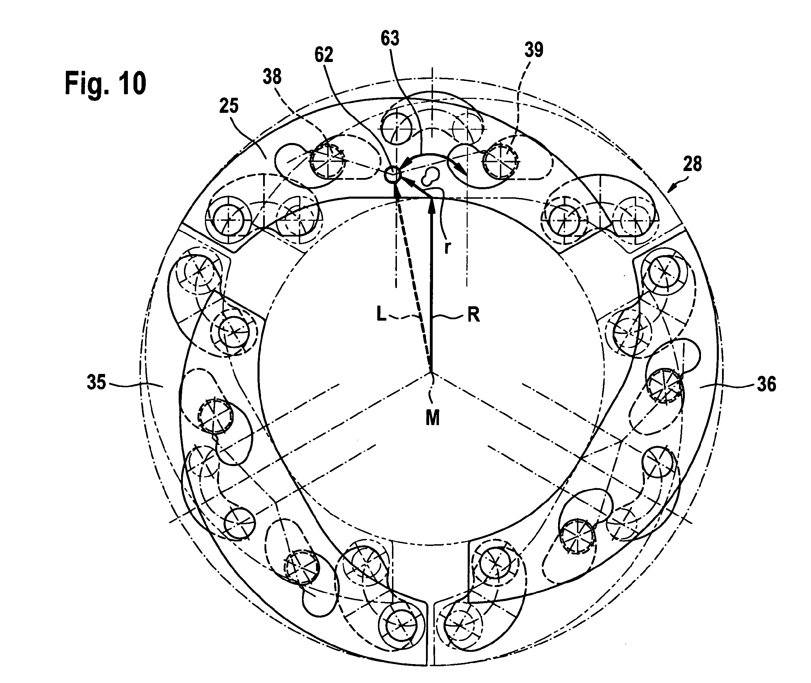

In Figur 10 ist das Funktionsprinzip des bifilar aufgehängten Fliehkraftpendels 28 dargestellt. Die Laufbahnen der Laufrollen 38, 39 der Fliehkraftpendeleinrichtung 28 sind so ausgelegt, dass der Schwerpunkt 62 der Pendelmasse 25 mit dem Radius r um den Abstand R zum Mittelpunkt M pendelt. Diese Bewegung, die durch einen Doppelpfeil 63 angedeutet ist, erzeugt einen variablen Abstand L des Schwerpunkts 62 zum Mittelpunkt M. Die Wurzel aus dem Verhältnis R/r ergibt die Ordnung, mit der die Pendelmasse 25 zusammen mit den Pendelmassen 35, 36 zum Schwingen angeregt wird. Bei Abstimmung nah oder direkt auf die Haupterregerordnung erfolgt eine Reduzierung der Schwingungsamplitude des Antriebsstrangs über dem gesamten Drehzahlbereich.

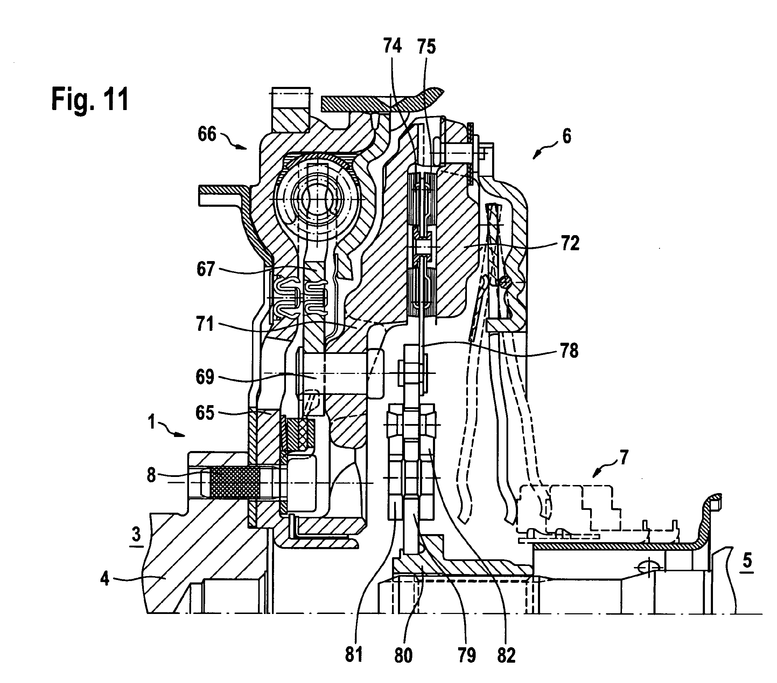

In Figur 11 ist ein Antriebsstrang 1 eines Kraftfahrzeugs gemäß einem weiteren Ausführungsbeispiel im Halbschnitt dargestellt. Der in Figur 11 dargestellte Antriebsstrang ähnelt dem in Figur 1 dargestellten Antriebsstrang. Zur Bezeichnung gleicher Teile werden gleiche Bezugszeichen verwendet. Um Wiederholungen zu vermeiden, wird auf die vorangegangene Beschreibung der Figur 1 verwiesen. Im Folgenden wird nur auf die Unterschiede zwischen den beiden Ausführungsbeispielen eingegangen.

Bei dem in Figur 11 dargestellten Ausführungsbeispiel ist an der Kurbelwelle 4 der Brennkraftmaschine 3 mit Hilfe der Schraubverbindung 8 ein Eingangsteil 65 einer Drehschwingungsdämpfungseinrichtung 66 befestigt. Ein Ausgangsteil 67 der Drehschwingungsdämpfungseinrichtung 66 ist mit Hilfe von Nietverbindungen 69, von denen in Figur 11 nur eine sichtbar ist, fest mit einer Gegendruckplatte 71 verbunden. Zwischen der Gegendruckplatte 71 und einer Druckplatte 72 der Kupplungseinrichtung 6 sind in bekannter Art und Weise Reibbeläge 74, 75 einer Kupplungsscheibe 78 einklemmbar. Die Kupplungsscheibe 78 ist mit Hilfe eines Flanschs 79 drehfest mit einer Kupplungsnabe 80 verbunden. Der Flansch 79 bildet eine Pendelmassenträgereinrichtung, an der mehrere Pendelmassen 81, 82 definiert bewegbar angebracht sind. Die Pendelmassen 81, 82 sind in gleicher Weise bifilar aufgehängt wie bei dem in den Figuren 1 bis 10 dargestellten Ausführungsbeispiel.

### Bezuctszeichenliste

1. Antriebsstrang
3. Antriebseinheit
4. Kurbelwelle
5. Getriebe
6. Kupplung
7. Ausrückeinrichtung
8. Schraubverbindungen
9. Flansch
10. Gegendruckplatte
12. Druckplatte
14. Reibbelag
15. Reibbelag
18. Kupplungsscheibe
19. Drehschwingungsdämpfer
20. Kupplungsnabe
21. Getriebeeingangswelle
22. Ende
23. Pendelmassenträgereinrichtung
24. Flanschelement
25. Pendelmasse
26. Pendelmasse
28. Fliehkraftpendeleinrichtung
31. Reibbelagsegment
32. Reibbelagsegment
33. Reibbelagsegment
35. Pendelmasse
36. Pendelmasse
38. Laufrolle
39. Laufrolle
41. Laufbahn
42. Laufbahn
44. Stufenbolzen
45. Stufenbolzen
46. Stufenbolzen
50. Pendelmasse
51. Mittenabschnitt
52. Abschnitt
53. Abschnitt
54. Ummantelung
55. Stufenbolzen
56. Mittenabschnitt
57. Abschnitt
58. Abschnitt
59. Ummantelung
60. Metallhülse
62. Schwerpunkt
63. Pfeil
65. Eingangsteil
66. Drehschwingungsdämpfungseinrichtung
67. Ausgangsteil
69. Nietverbindung
71. Gegendruckplatte
72. Druckplatte
74. Reibbelag
75. Reibbelag
78. Kupplungsscheibe
79. Flansch
80. Kupplungsnabe
81. Pendelmasse
82. Pendelmasse

## Patentansprüche

1. Kupplungseinrichtung mit einer Kupplungsscheibe (18;78), die eine Kupplungsnabe (20;80) umfasst, **dadurch gekennzeichnet, dass** eine Pendelmassenträgereinrichtung (23;79) einer Fliehkraftpendeleinrichtung (28), die mehrere Pendelmassen (25,26) umfasst, die an der Pendelmassenträgereinrichtung (23;79) relativ zu dieser bewegbar angebracht sind, mit der Kupplungsscheibe (18;78) gekoppelt ist.

2. Kupplungseinrichtung nach Anspruch 1, **dadurch gekennzeichnet, dass** die Pendelmassenträgereinrichtung (23;79) drehfest mit der Kupplungsnabe (20;80) verbunden ist.

3. Kupplungseinrichtung nach Anspruch 2, **dadurch gekennzeichnet, dass** die Fliehkraftpendeleinrichtung (28), insbesondere die Pendelmassenträgereinrichtung (23), radial innerhalb, zumindest eines axialen Abschnitts, einer Gegendruckplatte (10) der Kupplungseinrichtung (6) angeordnet ist.

4. Kupplungseinrichtung nach Anspruch 3, **dadurch gekennzeichnet, dass** die Fliehkraftpendeleinrichtung (28) in axialer Richtung zwischen einem axialen Abschnitt der Gegendruckplatte (10) und der Kupplungsscheibe (18) angeordnet ist.

5. Kupplungseinrichtung nach einem der Ansprüche 2 bis 4, **dadurch gekennzeichnet, dass** die Kupplungsscheibe (18) über mindestens eine Drehschwingungsdämpfungseinrichtung (19) mit der Kupplungsnabe (20) gekoppelt ist.

6. Kupplungseinrichtung nach einem der Ansprüche 1 bis 4, **dadurch gekennzeichnet, dass** die Kupplungsscheibe (78) durch die Pendelmassenträgereinrichtung (79) drehfest mit der Kupplungsnabe (80) verbunden ist.

7. Kupplungseinrichtung nach Anspruch 6, **dadurch gekennzeichnet, dass** sich die Pendelmassenträgereinrichtung (79) in radialer Richtung zwischen der Kupplungsnabe (80) und der Kupplungsscheibe (78) erstreckt.

8. Kupplungseinrichtung nach einem der vorhergehenden Ansprüche, **dadurch gekennzeichnet, dass** die Pendelmassen (25,50) paarweise durch Abstandsbolzen (44-46) miteinander verbunden sind.

9. Kupplungseinrichtung nach einem der vorhergehenden Ansprüche, **dadurch gekennzeichnet, dass** die Pendelmassen (25,50) mit Hilfe von Laufrollen (38,39) an der Pendelmassenträgereinrichtung (23) relativ zu dieser bewegbar angebracht sind.

10. Kupplungseinrichtung nach einem der vorhergehenden Ansprüche, **dadurch gekennzeichnet, dass** die Bewegung der Pendelmassen (25,50) relativ zu der Pendelmassenträgereinrichtung (23) durch mindestens ein Anschlagelement (44-46) begrenzt ist, das in Umfangsrichtung elastisch ausgebildet ist.

11. Kupplungseinrichtung nach Anspruch 10, **dadurch gekennzeichnet, dass** das Anschlagelement (45;55) von einem Stufenbolzen gebildet wird, dessen Enden jeweils in einer Pendelmasse (25,50) aufgenommen sind und der zwischen seinen Enden einen Mittenabschnitt (51;56) aufweist, der mit einem elastischen Material (54;59) ummantelt ist.

12. Kupplungseinrichtung nach Anspruch 11, **dadurch gekennzeichnet, dass** die elastische Ummantelung (59) wiederum mit einer Metallhülse (60) ummantelt ist.

13. Drehmomentübertragungseinrichtung im Antriebsstrang (1) eines Kraftfahrzeugs zur Drehmomentübertragung zwischen einer Antriebseinheit (3), insbesondere einer Brennkraftmaschine, mit einer Abtriebswelle (4), insbesondere einer Kurbelwelle, und einem Getriebe (5) mit mindestens einer Getriebeeingangswelle (21), und mit mindestens einer Kupplungseinrichtung (6) nach einem der vorhergehenden Ansprüche.
